# EUROPEAN PATENT APPLICATION

(11) **EP 4 761 082 A1**
(43) Date of publication of application: **17.06.2026**
(21) Application number: 24220317.2
(22) Date of filing: 16.12.2024
(51) Int. Cl.: H02M 1/00, H02M 1/08, H02M 1/32, H02M 3/156

(54) **REVERSE POLARITY PROTECTION**

(71) Applicant: Veoneer Sweden Safety Systems AB, 10302 Stockholm (SE)
(72) Inventor: FOUILLEUL, Antoine, 95800 Cergy-Pontoise (FR)
(74) Representative: Reichert & Lindner Partnerschaft Patentanwälte

(57) **Abstract**

A diode (23) used for ensuring unidirectional current flow in a DC-DC boost converter (40) is also used for protecting a circuit (3) including the DC-DC boost converter (40) against wrong polarity of a power source (11) of the circuit (3). A further diode (26) in the DC-DC boost converter (40) protects a driver (24) and a reference voltage source (21) of the DC-DC boost converter (40) against wrong polarity of the power source (11) of the circuit (3).

## Description

The invention relates to circuits with reverse polarity protection, as may be used, for example, in the automotive sector.

In many electronic circuits, for example in, but not limited to, the automotive sector, devices such as ECUs need to be protected against wrong polarity of an input voltage of such a device (reverse polarity protection). The use of a dedicated diode for this purpose is well known.

Electronic circuits nowadays can be quite complex, including many components. During operation, voltage drops may occur at such components. Even for diodes as just discussed for protecting against wrong polarity the voltage drop across the diode in forward direction, i.e., at correct polarity, can be significant, for example about 0.7 V. This voltage drop may be a problem for some devices to be supplied within or via the circuit, even more so if voltage drops from several components add up. Furthermore, at such components heat is generated, which not only implies a loss of energy, but sometimes also the need for cooling.

It is an object of the invention to address this problem in certain types of circuits.

The solution according to the invention addresses the problem in stages and applies to circuits including a DC-DC boost converter, as often used to supply a load like an ECU.

As a first stage the invention relates to a DC-DC boost converter according to claim 1, which in a second stage is used in a circuit according to claim 3.

The DC-DC boost converter according to the invention includes: a driver for the DC-DC boost converter, which controls the operation of the DC-DC boost converter; an inductor, as storage of electromagnetic energy; and a first diode, in series with the inductor, for ensuring unidirectional current flow from the inductor. According to the invention, the DC-DC boost converter includes a second diode, for protecting the driver against wrong polarity. In this way, the DC-DC boost converter, as far as its operation is concerned, does not depend on external measures to protect against wrong polarity. The second diode is not in series with the inductor.

In an embodiment the DC-DC boost converter includes a switch which is controlled by the driver. The switch, depending on its state, allows or blocks current flow through the inductor; if current flows through the inductor, electromagnetic energy is built up within the inductor.

The circuit according to the invention includes a DC-DC boost converter according to the invention, as described above.

In an embodiment the first diode of the DC-DC boost converter also is the sole diode for protecting a load to be supplied with current via an output contact of the DC-DC boost converter against wrong polarity of a power source for the circuit. In this way, no separate diode for protecting the load against wrong polarity is needed in the circuit. This implies that there is no voltage drop and no heat generation at such a diode. The second diode in the DC-DC boost converter, which protects the driver of the DC-DC boost converter, operates at lower currents than those carried by a separate diode for protecting against wrong polarity. This means that heat generation at the second diode is also lower; furthermore, voltage drops at the second diode affect only the driver of the DC-DC boost converter and do not adversely affect further components in the circuit.

Below, the invention and its advantages will be described with reference to the accompanying schematic figures.
- Figure 1: shows a circuit according to prior art.
- Figure 2: shows a circuit according to the invention.

The figures show only examples of circuits and DC-DC boost converters without limiting the invention to the examples shown.

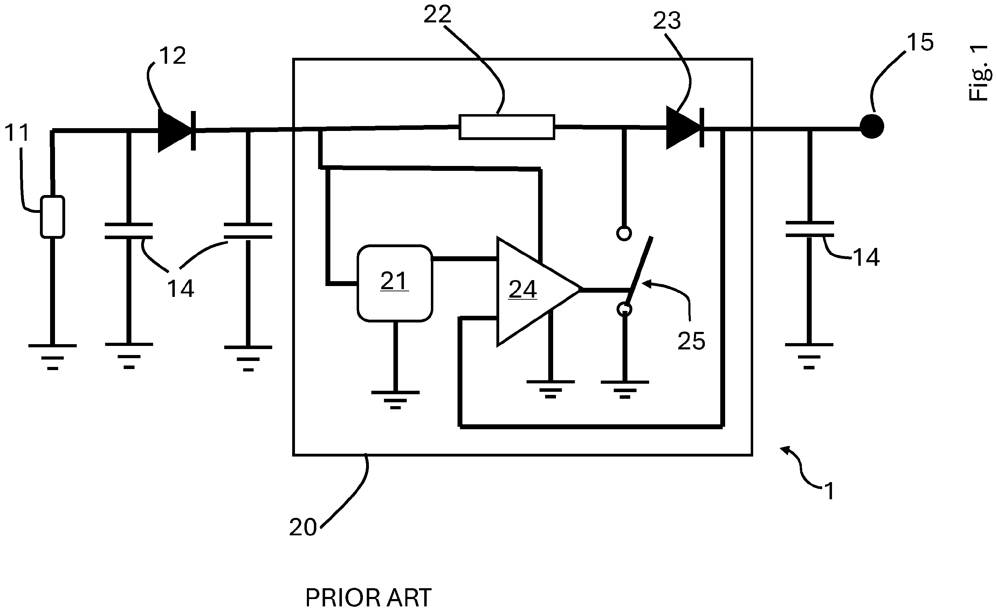

**Fig. 1** shows a circuit 1 according to prior art via which voltage can be supplied to a load (like an ECU, not shown). A power source 11 provides voltage to the circuit 1; without being limited thereto, the power source may provide a voltage of 12 V. A diode 12 is provided to protect against wrong polarity of the power source 11. The circuit 1 here includes a DC-DC boost converter 20 to increase the voltage from the power source 11 and provide this increased voltage via output contact 15 to the load; without being limited thereto, the DC-DC boost converter 20 may provide a voltage of 35 V at the output contact 15. Sections of circuit 1 are connected to a common ground via capacitances 14.

A DC-DC boost converter serves to convert a DC voltage to a higher DC voltage. The DC-DC boost converter 20 shown includes a reference voltage source 21 to provide a reference voltage for the desired output voltage. The DC-DC boost converter 20 furthermore includes an inductor 22, a first diode 23, a driver 24 and a switch 25; the latter, for example, may be implemented as a transistor.

The driver 24 controls switch 25 based on a comparison between the voltage of the reference voltage source 21 and the output voltage, i.e., dependent on the result of the comparison the driver 24 sets the switch 25 to an "open" state, where no current can pass through switch 25, or to a "closed" state, where current can pass through switch 25. If switch 25 is closed, current passes through inductor 22, building up a magnetic field in the inductor 22. When switch 25 is subsequently opened, the ensuing collapse of the magnetic field induces a voltage across inductor 22. This induced voltage, added to the input voltage from power source 11, results in a higher output voltage at output contact 15. By comparison of the output voltage with the voltage of the reference voltage source 21 in the driver 24, and corresponding control of switch 25 by the driver 24, the desired value of the output voltage can be achieved.

The first diode 23, in series with inductor 22, ensures unidirectional flow of current by preventing backflow from output contact 15 (ultimately from a load connected to output contact 15) to the inductor 22.

Diode 12 protects a load connected to output contact 15 as well as the DC-DC boost converter 20 against wrong polarity of the power source 11. During operation, even if diode 12 is forward-biased, i.e., in case of correct polarity of the power source 11, a significant voltage drop can occur across diode 12. It should be noted here that diode 12 carries the current intended to supply a load connected to output contact 15, which current may be rather high. Apart from a corresponding significant voltage drop, also considerable amounts of heat can be produced at diode 12, which ultimately are a loss of energy. Depending on the maximum currents to be passed to the load, suitable diodes 12 have to be chosen. For high currents, correspondingly large (and expensive) diodes are required. The voltage drop at diode 12 can cause problems in particular in circuits in which the operating voltage is comparable to the voltage drop, i.e., the remaining voltage after the voltage drop may not be sufficient for proper operation of the circuit.

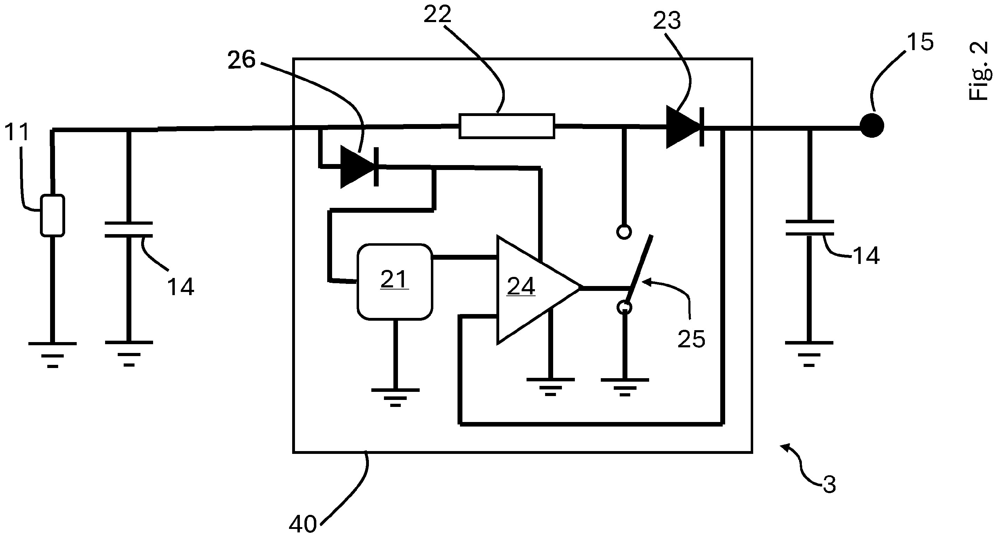

**Fig. 2** shows a circuit 3 according to the invention with a DC-DC boost converter 40 according to the invention. Circuit 3 is similar but not identical to circuit 1 of prior art discussed in the context of Fig. 1. Note in particular that circuit 3, contrary to circuit 1, does not have a diode 12.

DC-DC boost converter 40 is similar but not identical to DC-DC boost converter 20 of prior art discussed in the context of Fig. 1. The components of DC-DC boost converter 40 which also appear in DC-DC boost converter 20 perform corresponding functions as discussed in the context of Fig. 1.

DC-DC boost converter 40 exhibits a second diode 26 which protects reference voltage source 21 and driver 24 against wrong polarity of the power source 11. First diode 23 here not only protects against backflow from a load at output contact 15 to the inductor 22, but also protects such a load against wrong polarity of the power source 11. So, in this setup, a separate diode, as diode 12 in circuit 1 of Fig. 1, is not required for protecting the load and the DC-DC boost converter 40 against wrong polarity of the power source 11. This eliminates the voltage drop and the heat generation at such a diode 12, discussed in the context of Fig. 1. The second diode 26, not in series with inductor 22, typically carries currents far smaller than those supplied to the load; therefore, the second diode 26 can be smaller than diode 12 in circuit 1. Also, voltage drop and heat generation at the second diode 26 therefore will be smaller than at diode 12 of circuit 1. A voltage drop at the second diode 26 furthermore does not affect the voltage at output contact 15.

### List of Reference Signs

- 1: circuit
- 3: circuit
- 11: power source
- 12: diode
- 14: capacitance
- 15: output contact (of DC-DC boost converter)
- 20: DC-DC boost converter
- 21: reference voltage source
- 22: inductor
- 23: first diode
- 24: driver
- 25: switch
- 26: second diode
- 40: DC-DC boost converter

## Claims

1. DC-DC boost converter (40) including:
a driver (24) for the DC-DC boost converter (40);
an inductor (22), as storage of electromagnetic energy;
a first diode (23) in series with the inductor (22), for ensuring unidirectional current flow from the inductor (22);
**characterized by**
a second diode (26), for protecting the driver (24) against wrong polarity.

2. DC-DC boost converter (40) according to claim 1, including a switch (25), controlled by the driver (24), allowing or blocking, dependent on its state, current flow through the inductor (22).

3. Circuit (3) with a DC-DC boost converter (40) according to claim 1 or 2.

4. Circuit (3) according to claim 3, wherein the first diode (23) of the DC-DC boost converter (40) also is the sole diode for protecting a load to be supplied with current via an output contact (15) of the DC-DC boost converter (40) against wrong polarity of a power source (11) for the circuit (3).
